# NEW EUROPEAN PATENT SPECIFICATION

(11) **EP 2 504 389 B2**
(45) Date of publication and mention of the opposition decision: **11.01.2017**
(45) Mention of the grant of the patent: 29.01.2014
(21) Application number: 09796338.3
(22) Date of filing: 27.11.2009
(51) Int. Cl.: C08L 23/00, D06N 7/00, C08L 23/08, C08L 51/06

(54) **FLOOR OR WALL COVERING**
BODEN- ODER WANDBELAG
REVÊTEMENT DE SOL OU DE MUR

(43) Date of publication of application: 03.10.2012
(73) Proprietor: Tarkett G.D.L. S.a., 9779 Lentzweiler (LU)
(72) Inventor: BASTIN, Pierre, L-9559 Wiltz (LU); DI CROCE, Pascal, L-9559 Wiltz (LU)
(74) Representative: Pronovem
(86) International application number: PCT/EP2009/065993
(87) International publication number: WO 2011/063849

(56) References cited:
- EP-A1- 0 546 841
- EP-A1- 0 893 469
- EP-A1- 1 867 461
- EP-A2- 0 621 128
- EP-A2- 0 861 951
- EP-A2- 0 861 951
- EP-A2- 1 184 166
- EP-A2- 1 184 166
- WO-A1-02/26879
- WO-A1-02/26879
- WO-A1-98/38245
- WO-A1-99/07784
- WO-A1-99/07785
- WO-A1-2008/103887
- DE-C1- 4 127 107
- JP-A- 2005 163 534
- US-A- 4 762 882
- US-A- 5 728 476
- US-A- 5 760 140
- US-A- 5 760 140
- US-A- 5 763 501
- US-A- 5 945 472
- US-A- 5 945 472
- US-B1- 6 287 706
- US-B1- 6 699 573
- US-B2- 6 932 592

## Description

### Field of the invention

The present invention relates to a thermoplastic floor or wall covering comprising at least one layer of a thermoplastic composition comprising a polymer comprising acid anhydride groups and a filler.

### Prior art and related technical background

Synthetic surface coverings, such as floor or wall coverings, are well known. Among them, multiple layer coverings usually comprise a lower layer known as "support layer", and an upper layer known as "wear layer". In opposition to other polymeric sheet materials, a floor or wall covering, and the different layers of a multiple layer covering has specific properties in terms of flexibility and mechanical resistance.

Surface coverings, and particularly support layers, are usually PVC-based. However due to environmental issues on PVC coverings, alternatives to PVC coverings were developed. Such alternatives are for example polyolefin-based or ionomer-based surface coverings.

In particular, US 6 287 706 describes a sheet material suitable for use in or as a floor covering comprising a polyolefin resin obtained by a metallocene catalysis, and US 5 763 501 describes a foamed layer comprising a polyolefin elastomer (POE) or polyolefin plastomer (POP).

However, these alternative surface coverings present several drawbacks, among which poor mechanical properties, especially poor residual indentation, and softness in comparison of PVC-based surface coverings.

### Aims of the invention

The present invention aims to provide a PVC-free floor or wall covering which does not have the drawbacks of the prior art and which is an alternative to traditional PVC surface coverings.

The invention aims to provide a PVC-free floor or wall covering having a residual indentation property close to the ones of a PVC-based surface covering.

The invention provides therefore a PVC-free floor or wall covering, preferably in the form of rolls or tiles, with improved residual indentation properties and with a support layer of a non-crosslinked thermoplastic composition which is recyclable and has a reduced production time.

### Summary of the invention

The present invention discloses a PVC-free floor or wall covering comprising at least one layer of a thermoplastic composition, said composition comprising:
- a polymer matrix comprising at least one polymer selected from the group consisting of EVA, EMA, EBA, EEA, EPM, EPDM, VLDPE, LLDPE, POE, and POP, or mixtures thereof and having a MFI of between 0.6 and 3g/10 min (at 190°C under 2.16 kg weight), and at least one polymer having 0.5 to 3.1% wt of acid anhydride groups and representing 10 to 40 parts wt of said matrix,
   EVA representing 20 to 40 parts of said matrix,
   VLDPE having a density between 0.895 and 0.905 g/cm³ representing 20 to 40 parts of said matrix,
   POE or POP having a density between 0.870 and 0.902 g/cm³ representing 20 to 40 parts of said matrix,
   the total amount of the polymers being combined to 100 parts, and
- 100 to 500 parts of at least one filler per 100 parts of polymer or polymers.
The present invention further discloses a PVC-free floor or wall covering comprising at least one layer of a thermoplastic composition, said composition comprising:
- a polymer matrix comprising at least one polymer selected from the group consisting of EVA, EMA, EBA, EEA, EPM, EPDM, VLDPE, LLDPE, POE, and POP, or mixtures thereof and having a MFI of between 0.6 and 3g/10 min (at 190°C under 2.16 kg weight), and at least one polymer having 0.5 to 3.1% wt of acid anhydride groups and representing 10 to 40 parts wt of said matrix,
   LLDPE having a density between 0.915 and 0.925 g/cm³ representing 30 to 45 parts of said matrix, VLDPE having a density between 0.895 and 0.905 g/cm³ representing 30 to 45 parts of said matrix,
   the total amount of the polymers being combined to 100 parts, and
- 100 to 500 parts of at least one filler per 100 parts of polymer or polymers

According to particular embodiments, the floor covering may comprise one, or a suitable combination of one or several, of the following characteristics:
- the polymer comprising acid anhydride groups is an olefin polymer,
- the polymer comprising acid anhydride groups is an ethylene-acrylic ester-acid anhydride terpolymer,
- the polymer comprising acid anhydride groups represents between 10 and 30 parts per 100 parts of the total amount of polymers in the polymer matrix of the thermoplastic composition,
- the acid anhydride is maleic anhydride,
- the at least one filler is present in an amount between 200 and 350 phr, (parts per hundred part of polymer resin) ;
- the at least one filler is calcium carbonate and/or calcium magnesium carbonate,
- the thermoplastic composition further comprises 0.5 to 4 phr of stearic acid and/or 2 to 25 phr of a mineral oil,
- the at least one layer is a support layer of a multiple layer floor covering in the form of rolls or tiles.

### Brief description of the drawings

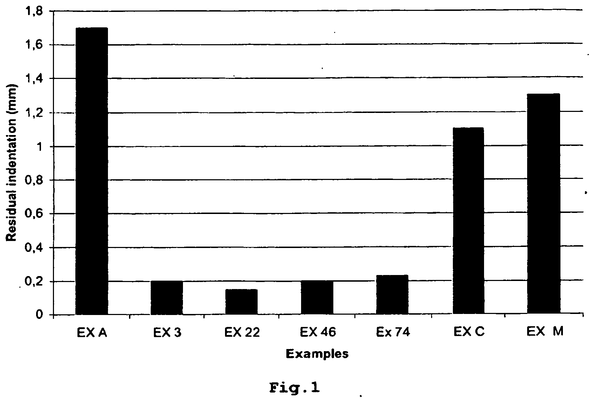

Figure 1 represents the effect of various polymers comprising acid anhydride groups on the residual indentation of a 2 mm thick support layer comprising, as main polymeric constituent, a polyolefin plastomer with a density of 0,87g/cm³ and an MFI of 1g/10 min blended with an EVA co-polymer (with a content of 19% of vinyl acetate and a MFI of 0.7 g/10 min), and comprising 350 phr of calcium carbonate as filler.

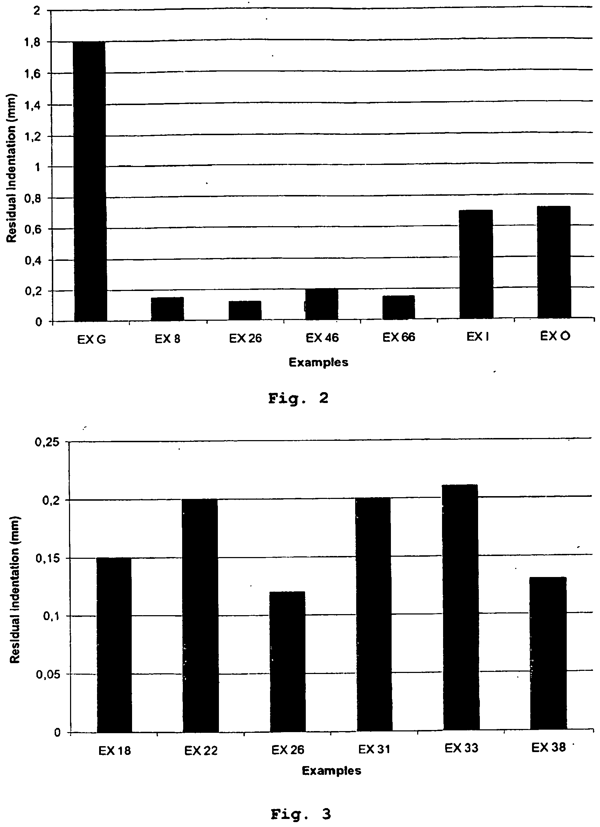

Figure 2 represents the effect of various polymers comprising acid anhydride groups on the residual indentation of a 2 mm thick support layer comprising, as main polymeric constituent, a polyolefin obtained by a metallocene catalysis, having a density of 0.902g/cm³ and an MFI of 1g/10 min, and comprising 350 phr of a filler.
Figure 3 represents the effect of a polymer grafted with acid anhydride groups (F525) on the residual indentation of a 2 mm thick support layer comprising various polymers as main polymeric constituents.
Figure 4 represents the influence of the polymers comprising acid anhydride groups on the residual indentation of a 2 mm thick support layer comprising, as main polymeric constituent, a combination of LLDPE and VLDPE (1/1), and comprising 350 phr of chalk.
Figure 5 represents the influence of the polymers comprising acid anhydride groups on the residual indentation of a 2 mm thick support layer comprising as main polymeric constituent a polyolefin plastomer, and comprising 350 phr of chalk.
Figure 6 represents the influence of the type of filler on the residual indentation of a 2 mm thick support layer with and without a polymer comprising acid anhydride groups.
Figure 7 represents the influence of 20 and 40 parts of two different polymers comprising maleic anhydride groups on the residual indentation of a 2mm thick support layer comprising 350 phr of calcium carbonate.

### Detailed description of the invention

The present invention relates to a floor or a wall covering in accordance with the claims, of at least one (one or more) layer, said layer being made of a thermoplastic composition comprising as main constituents a polyolefin resin, or a combination of polyolefin resins, and at least one (one or more) polymer comprising acid anhydride groups and at least one (one or more) filler.

Preferably, the thermoplastic composition is used in a support layer of a multiple layer floor covering in the form of rolls or tiles. For rolls a flexibility criteria is requested and a good resistance at break. For tiles, a higher hardness and a lower resistance at break is allowable.

The main constituent of the thermoplastic compositions is a polyolefin resin, or a combination of polyolefin resins, which are preferably copolymers of ethylene and another alpha olefin monomer having from 2 to 20 carbon atoms, preferably 3 to 8 carbon atoms, diolefins and/or acetylenically unsaturated monomers, or a copolymer derived from the polymerisation of two or more different monomers. As such, the term copolymer is intended to include ter-polymer and polymers produced from more than three different co-monomers, for example inter-polymers.

The polyolefin resin is selected from the group consisting of EVA, EMA, EBA, EEA, EPM, EPDM, VLDPE, LLDPE, polyolefin elastomers (POE), polyolefin plastomers (POP), and mixtures thereof. Polymers like EVA, VLDPE, LLDPE, polyolefin elastomers, polyolefin plastomers, or combinations thereof are preferred.

Concerning the definition of POE and POE we refer to the *"*handbook of Plastics Elastomers and Composites, Charles A. Harper, 4th edition, Mc Graw-Hill Handbooks, p 195, elastomer and plastomer resins may also be defined as being elastomer when the content of octene monomer is less than 20%, and as being plastomer when the content of octene monomer is more than 20%.

The polyolefin elastomer or plastomers are disclosed in US 5 272 236 and US 5 278 272, the disclosures of which are incorporated herein by reference.

Preferably, the polyolefin resin is a copolymer of ethylene and another alpha olefin monomer which comprises a percentage of ethylene above 50%.

Polyethylene based polymers are preferably, VLDPE (very low density polyethylene) with a density range of 0.880-0.915 g/cm³(ASTM D792), LLDPE (linear low density polyethylene) with a density range of 0.915-0.925 g/cm³(ASTM D792), polyolefin elastomers (POEs) or plastomers (POPs) with a density of 0.87-0.902 g/cm³ (ASTM D792), POEs having a density around 0.87 g/cm³ and the POPs having a density around 0.90 g/cm³.

The polyolefin resin or resins used in combination in the thermoplastic composition have preferably a melt flow index (MFI) between 0.6 to 3 g/10 min at 190°C, under 2.16 kg weight.

Some or all the polyolefin polymers may be obtained by a metallocene-based catalysis.

Regarding the polymer comprising acid anhydride groups, said acid anhydride groups are integrated into the polymer chain, preferably as a terpolymer, or grafted by a chemical modification on the polymer chain, said polymer being various possible polyolefin polymers.

The polymer comprising acid anhydride groups comprises between 0.5 to 3.1 wt% of acid anhydride, preferably between 1 to 3.1 wt% and more preferably around 2 wt%.

Preferably, the polymer comprising acid anhydride groups comprises carboxylic acid anhydride groups, and more preferably maleic anhydride (MAH) groups.

The polymer comprising acid anhydride groups may be, for example, a polyethylene incorporating maleic anhydride monomers and having a density of around 0.94 g/cm³ and a MFI of around 25g/10 min, or a terpolymer of ethylene, butyl-acrylate and maleic anhydride, said terpolymer having a density of around 0.94 g/cm³ and a MFI of around 5g/10 min, or a polyolefin plastomer or elastomer, obtained by a metallocene catalysis and chemically modified to incorporate maleic anhydride, and having a density of around 0.88 g/cm³ and a MFI of around 3.7g/10 min, or an EVA polymer chemically modified to incorporate maleic anhydride, and having a density of around 0.96 g/cm³ and a MFI of around 1.4g/10 min.

The polymer comprising acid anhydride groups represents preferably between 10 to 30 parts.

The thermoplastic composition of at least one layer of a multiple layer surface covering according to present invention may comprise a combination of different polymers comprising acid anhydride groups.

The thermoplastic composition may also comprise usual additives such as thermal or light stabilizers, antistatic additives, processing additives, the type and the quantity of these additives being adapted to the process in particular to the type and quantity of component of the layer composition and in particular to the filler used. Preferably, it comprises between 0.5 to 4 phr of stearic acid, and/or between 2 to 25 phr of a mineral oil.

### EXAMPLES

Generally, a PVC-based layer of a multiple layer surface covering, or a PVC-based so-called homogenous surface covering, and a layer of a multiple layer surface covering, present a residual indentation of between 0.15 and 0.25 mm on an initial 2 mm thickness, and a hardness of between 1000 and 2000 (see table 1).

### Comparative examples of PVC-based compositions

**Table 1**

| PVC-based composition 1 | in phr | Residual indentation/ hardness of a 2mm layer |
|---|---|---|
| PVC | 100 | 0.22mm / 1500 |
| DINP | 40 | |
| Stabiliser | 2 | |
| Epoxided soja oil | 2.5 | |
| MgCaCO₃ / CaCO₃ | 150/50 | |

| PVC-based composition 2 | | Residual indentation/ hardness of a 2mm layer⁽*⁾ |
|---|---|---|
| PVC | 100 | 0.23mm / 1800 |
| DINP | 35 | |
| Stabiliser | 4 | |
| Epoxided soja oil | 3 | |

| | | |
|---|---|---|
| (*): 0.2 mm of a wear layer having the composition 2, assembled with 1.8 mm of a layer having the composition 1. | | |

Acid-based terpolymers, which may be partially neutralised to form an ionomer, are known to improve the impact resistance and elastic properties of a layer incorporating such compounds. Therefore, compositions comprising a terpolymer (Bynel^{®} 2002 from DuPont™) comprising acrylic acid monomers (examples M to O of Table 3) and compositions comprising a terpolymer ionomer (Surlyn^{®} 9320 from DuPont™) partially neutralised with Zn ions (examples A to L of table 2) were used as comparative examples.

The polyolefin resin is premixed with either the acid-based terpolymers (comparative examples) or with the polymer comprising acid anhydride groups (examples according to the invention), the filler, the processing additives and optionally the pigment, before being calendered, using a calendering device, to give a 2 mm thick sheet, the working temperature being between 110 and 200 DEG C.

The residual indentation, the resistance at break and the hardness, of the examples were assessed and the results are given in tables 2 to 8.

The residual indentation was assessed according to an in-house test wherein a surface of around 0.25 cm² of a sample, having a thickness of around 2 mm, is submitted to a pressure (500 N) of a weight of 50 kg applied during 60 seconds. The total deformation is measured and the residual indentation (given in millimetres) is measured 60 seconds after stopping the pressure.

The resistance at break corresponds to the folding ability of a 2 mm thick surface covering sample, folded at an angle of 180 degree (the wear layer is compressed and the sub-layer is elongated). The sample is suitable for rolls if the sample does not break, and suitable for tiles if the sample breaks during folding due to a hardness value higher than 3000.

The hardness of the surface covering is measured by bending a sample having a dimension of 100 mm X 40 mm, the bending angle being 30 degree, the distance to the axis for bending being 50 mm. The force applied for bending the sample at 30 degree is given in mN.

In the following tables, the polymer resins represent all together 100 parts and the additional ingredients of the thermoplastic composition are given in parts per hundred part of polymer resins (phr).

### Examples of reference compositions comprising 0 or 10 or 20 parts of an ionomer (comparative)

**Table 2**

| | Polymer (parts) | Surlyn 9320 (parts) | Calcium carbonate (phr) | Mineral oil (phr) | Stearic acid (phr) | Residual indentation in mm/2mm |
|---|---|---|---|---|---|---|
| EX A | 100 DF710/EVA(35/65) | 0 | 350 | 18 | 2 | 1.7 |
| EX B | 90 DF710/EVA(35/65) | 10 | 350 | 18 | 2 | 1.3 |
| EX C | 80 DF710/EVA(35/65) | 20 | 350 | 18 | 2 | 1.1 |
| EX D | 100 Exact48201 | 0 | 350 | 18 | 2 | 1.8 |
| EX E | 90 Exact48201 | 10 | 350 | 18 | 2 | 1.5 |
| EX F | 80 Exact48201 | 20 | 350 | 18 | 2 | 1.3 |
| EX G | 100 Exact0201 | 0 | 350 | 18 | 2 | 1.8 |
| EX H | 90 Exact0201 | 10 | 350 | 18 | 2 | 0.9 |
| EX I | 80 Exact0201 | 20 | 350 | 18 | 2 | 0.7 |
| EX J | 100 Clearflex^{®} CHDO | 0 | 350 | 18 | 2 | 1.15 |
| EX K | 90 Clearflex^{®} CHDO | 10 | 350 | 18 | 2 | 1.3 |
| EX L | 80 Clearflex^{®} CHDO | 20 | 350 | 18 | 2 | 1.1 |

### Examples of reference compositions comprising 20 parts of acid terpolymer (comparative)

**Table 3**

| | Polymer (parts) | Bynel 2002 (parts) | Calcium carbonate (phr) | Mineral oil (phr) | Stearic acid (phr) | Residual indentation in mm/2mm |
|---|---|---|---|---|---|---|
| EX M | 80 DF710/EVA(35/65) | 20 | 350 | 18 | 2 | 1.3 |
| EX N | 80 Exact48201 | 20 | 350 | 18 | 2 | 1.5 |
| EX O | 80 Exact0201 | 20 | 350 | 18 | 2 | 0.7 |

The highest acceptable residual indentation, for floor or wall coverings applications, is about 0.4 or 0.5 mm, measured on a 2 mm thick sheet, while the residual indentation for universal applications should be lower than 0.4 mm/2mm. Furthermore, it is generally admitted that to process a floor or wall covering using rolls, hardness limit of the layer is around 3000; therefore, for lower hardness than 3000, the composition can be used in rolls processing.

Table 2 shows that, at a constant rate of filler, the residual indentation improves progressively with the addition of ionomers, but the lowest residual indentation (0.7 mm) is considered as not acceptable.

Table 3 shows that, with constant terpolymer and filler rates, the residual indentation can also be influenced by the choice of the polymer. Nevertheless, the lowest residual indentation (0.7 mm) is considered as not acceptable.

### Examples of thermoplastic compositions (examples 16 to 19, 38-44, 57-59 and 69-70 according to the invention)

**Table 4 (examples with polymer comprising maleic acid anhydride, Fusabond^{®} 603 from DuPont™, examples 16 to 19 according to the invention, unclaimed examples: 1-15)**

| | Polymer (parts) | MAH polymer F603 (parts) | Calcium carbonate (phr) | Mineral oil (phr) | Stearic Acid (phr) | Residual indentation in mm/2mm | Resistance at break suitable for | Hardness |
|---|---|---|---|---|---|---|---|---|
| EX 1 | 90 DF710/EVA(35/65) | 10 | 350 | 18 | 2 | 0.25 | Rolls | 2200 |
| EX 2 | 80 DF710/EVA(35/65) | 20 | 500 | 25 | 3 | 0.15 | Tiles | 3500 |
| EX 3 | 80 DF710/EVA(35/65) | 20 | 350 | 18 | 2 | 0.2 | Rolls | 2500 |
| EX 4 | 80 DF710/EVA(35/65) | 20 | 200 | 6 | 2 | 0.47 | Rolls | 2200 |
| EX 5 | 80 DF710/EVA(35/65) | 20 | 100 | 3 | 2 | 0.18 | Rolls | 2000 |
| EX 6 | 80 Exact48201 | 20 | 500 | 25 | 3 | 0.17 | Tiles | 3200 |
| EX 7 | 80 Exact48201 | 20 | 350 | 18 | 2 | 0.3 | Rolls | 2100 |
| EX 8 | 80 Exact48201 | 20 | 200 | 6 | 2 | 0.5 | Rolls | 1900 |
| EX 9 | 90 Exact0201 | 10 | 350 | 18 | 2 | 0.1 | Tiles | 4000 |
| EX 10 | 80 Exact0201 | 20 | 500 | 25 | 3 | 0.15 | Tiles | 5000 |
| EX 11 | 80 Exact0201 | 20 | 350 | 18 | 2 | 0.15 | Tiles | 4500 |
| EX 12 | 80 Exact0201 | 20 | 200 | 6 | 2 | 0.13 | Tiles | 4300 |
| EX 13 | 80 Exact0201 | 20 | 100 | 3 | 2 | 0.2 | Tiles | 4000 |
| EX 14 | 90 Clearflex^{®} CHDO | 10 | 350 | 18 | 2 | 0.26 | Tiles | 5000 |
| EX 15 | 80 Clearflex^{®} CHDO | 20 | 350 | 18 | 2 | 0.15 | Tiles | 3500 |
| EX 16 | 45 LLDPE/45 VLDPE | 10 | 350 | 18 | 2 | 0.25 | Tiles | 5000 |
| EX 17 | 40 LLDPE/40 VLDPE | 20 | 350 | 18 | 2 | 0.15 | Tiles | 3500 |
| EX 18 | 40 LLDPE/40 VLDPE | 20 | 200 | 6 | 2 | 0.17 | Tiles | 3800 |
| EX 19 | 40 LLDPE/40 VLDPE | 20 | 100 | 3 | 2 | 0.3 | Tiles | 3900 |

**Table 5 (examples with polymer comprising maleic acid anhydride, Fusabond^{®} 525 from DuPont™, examples 38 to 44 according to the invention, unclaimed examples: 20-37)**

| | Polymer (parts) | MAH polymer F525 (parts) | Calcium carbonate (phr) | Mineral oil (phr) | Stearic acid (phr) | Residual indentation in mm/2mm | Resistance at break suitable for | Hardness |
|---|---|---|---|---|---|---|---|---|
| EX 20 | 90 DF710/EVA(35/65) | 10 | 350 | 18 | 2 | 0.2 | Rolls | 1400 |
| EX 21 | 80 DF710/EVA(35/65) | 20 | 500 | 25 | 3 | 0.22 | Rolls | 2800 |
| EX 22 | 80 DF710/EVA(35/65) | 20 | 350 | 18 | 2 | 0.15 | Rolls | 1500 |
| EX 23 | 80 DF710/EVA(35/65) | 20 | 200 | 6 | 2 | 0.11 | Rolls | 900 |
| EX 24 | 80 DF710/EVA(35/65) | 20 | 100 | 3 | 2 | 0.17 | Rolls | 1100 |
| EX 25 | 60 DF710/EVA(35/65) | 40 | 350 | 18 | 2 | 0.14 | Rolls | 1050 |
| EX 26 | 80 Exact48201 | 20 | 500 | 25 | 3 | 0.22 | Rolls | 2600 |
| EX 27 | 80 Exact48201 | 20 | 350 | 18 | 2 | 0.2 | Rolls | 1400 |
| EX 28 | 80 Exact48201 | 20 | 200 | 6 | 2 | 0.11 | Rolls | 975 |
| EX 29 | 60 Exact48201 | 40 | 350 | 18 | 2 | 0.14 | Rolls | 1050 |
| EX 30 | 90 Exact0201 | 10 | 350 | 18 | 2 | 0.15 | Tiles | 2200 |
| EX 31 | 80 Exact0201 | 20 | 500 | 25 | 3 | 0.15 | Tiles | 3200 |
| EX 32 | 80 Exact0201 | 20 | 350 | 18 | 2 | 0.12 | Rolls | 1800 |
| EX 33 | 80 Exact0201 | 20 | 200 | 6 | 2 | 0.18 | Tiles | 3500 |
| EX 34 | 80 Exact0201 | 20 | 100 | 3 | 2 | 0.26 | Rolls | 1400 |
| EX 35 | 60 Exact0201 | 40 | 350 | 18 | 2 | 0.15 | Rolls | 1600 |
| EX 36 | 90 Clearflex^{®} CHDO | 10 | 350 | 18 | 2 | 0.15 | Rolls | 2200 |
| EX 37 | 80 Clearflex^{®} CHDO | 20 | 350 | 18 | 2 | 0.2 | Rolls | 2400 |
| EX 38 | 45 LLDPE/45 VLDPE | 10 | 350 | 18 | 2 | 0.22 | Tiles | 2400 |
| EX 39 | 40 LLDPE/40 VLDPE | 20 | 350 | 18 | 2 | 0.21 | Tiles | 2500 |
| EX 40 | 40 LLDPE/40 VLDPE | 20 | 200 | 6 | 2 | 0.2 | Rolls | 2600 |
| EX 41 | 40 LLDPE/40 VLDPE | 20 | 100 | 3 | 2 | 0.23 | Rolls | 2700 |
| EX 42 | 30 LLDPE/30 VLDPE | 40 | 350 | 18 | 2 | 0.2 | Rolls | 1800 |
| EX 43 | 30 DF710/30 EVA | 10 | 350 | 18 | 2 | 0.17 | Rolls | 1500 |
| | 30 VLDPE | | | | | | | |
| EX 44 | 26.66 DF710 | 20 | 350 | 18 | 2 | 0.13 | Rolls | 1550 |
| | 26.66 EVA | | | | | | | |
| | 26.67 VLDPE | | | | | | | |

**Table 6 (examples polymer comprising maleic acid anhydride, Fusabond^{®} 250 from DuPont™, examples 57 to 59 according to the invention, unclaimed examples: 45-56)**

| | Polymer (parts) | MAH polymer F250 (parts) | Calcium Carbonate (phr) | Mineral oil (phr) | Stearic acid (phr) | Residual indentation in mm/2mm | Resistance at break suitable for | Hardness |
|---|---|---|---|---|---|---|---|---|
| EX 45 | 90 DF710/EVA(35/65) | 10 | 350 | 18 | 2 | 0.15 | Rolls | 1200 |
| EX 46 | 80 DF710/EVA(35/65) | 20 | 350 | 18 | 2 | 0.2 | Rolls | 1700 |
| EX 47 | 80 DF710/EVA(35/65) | 20 | 200 | 6 | 2 | 0.17 | Rolls | 1600 |
| EX 48 | 80 DF710/EVA(35/65) | 20 | 100 | 3 | 2 | 0.17 | Rolls | 1200 |
| EX 49 | 80 Exact48201 | 20 | 350 | 18 | 2 | 0.15 | Rolls | 1500 |
| EX 50 | 80 Exact48201 | 20 | 200 | 6 | 2 | 0.19 | Rolls | 1200 |
| EX 51 | 90 Exact0201 | 10 | 350 | 18 | 2 | 0.15 | Tiles | 2000 |
| EX 52 | 80 Exact0201 | 20 | 350 | 18 | 2 | 0.2 | Tiles | 2100 |
| EX 53 | 80 Exact0201 | 20 | 200 | 6 | 2 | 0.26 | Tiles | 3000 |
| EX 54 | 80 Exact0201 | 20 | 100 | 3 | 2 | 0.11 | Rolls | 1700 |
| EX 55 | 90 Clearflex^{®} CHDO | 10 | 350 | 18 | 2 | 0.3 | Tiles | 2400 |
| EX 56 | 80 Clearflex^{®} CHDO | 20 | 350 | 18 | 2 | 0.2 | Tiles | 2600 |
| EX 57 | 45 LLDPE/45 VLDPE | 10 | 350 | 18 | 2 | 0.31 | Tiles | 2300 |
| EX 58 | 40 LLDPE/40 VLDPE | 20 | 350 | 18 | 2 | 0.2 | Tiles | 2400 |
| EX 59 | 40 LLDPE/40 VLDPE | 20 | 200 | 6 | 2 | 0.26 | Tiles | 3000 |

**Table 7 (examples with polymer comprising maleic acid anhydride, Fusabond^{®} 493 from DuPont™, examples 69 to 70 according to the invention, unclaimed examples: 60-68)**

| | Polymer (parts) | MAH polymer F493 (parts) | Calcium carbonate (phr) | Mineral oil (phr) | Stearic acid (phr) | Residual indentation in mm/2mm | Resistance at break suitable for | Hardness |
|---|---|---|---|---|---|---|---|---|
| EX 60 | 80 DF710/EVA(35/65) | 20 | 350 | 18 | 2 | 0.2 | Rolls | 1300 |
| EX 61 | 80 DF710/EVA(35/65) | 20 | 200 | 6 | 2 | 0.11 | Rolls | 900 |
| EX 62 | 80 DF710/EVA(35/65) | 20 | 100 | 3 | 2 | 0.14 | Rolls | 800 |
| EX 63 | 80 Exact48201 | 20 | 200 | 6 | 2 | 0.16 | Rolls | 850 |
| EX 64 | 90 Exact0201 | 10 | 350 | 18 | 2 | 0.3 | Rolls | 1900 |
| EX 65 | 80 Exact0201 | 20 | 350 | 18 | 2 | 0.15 | Rolls | 1800 |
| EX 66 | 80 Exact0201 | 20 | 200 | 6 | 2 | 0.24 | Rolls | 2500 |
| EX 67 | 80 Exact0201 | 20 | 100 | 3 | 2 | 0.13 | Rolls | 1200 |
| EX 68 | 80 Clearflex^{®} CHDO | 20 | 350 | 18 | 2 | 0.3 | Rolls | 1800 |
| EX 69 | 40 LLDPE/40 VLDPE | 20 | 350 | 18 | 2 | 0.31 | Rolls | 1850 |
| EX 70 | 40 LLDPE/40 VLDPE | 20 | 200 | 6 | 2 | 0.25 | Rolls | 2000 |

**Table 8 (unclaimed examples with ethylene-acrylic ester-acid anhydride terpolymer Lotader^{®} Arkema)**

| | Polymer (parts) | Lotader 3210 | Calcium carbonate (phr) | Mineral oil (phr) | Stearic acid (phr) | Residual indentation in mm/2mm | Resistance at break suitable for | Hardness |
|---|---|---|---|---|---|---|---|---|
| EX 71 | 80 DF710/EVA(35/65) | 20 | 500 | 25 | 3 | 0.15 | Tiles | 3100 |
| EX 72 | 80 DF710/EVA(35/65) | 20 | 350 | 18 | 2 | 0.24 | Rolls | 2100 |
| EX 73 | 80 Exact48201 | 20 | 500 | 25 | 3 | 0.2 | Tiles | 3300 |
| Ex 74 | 80 Exact48201 | 20 | 350 | 18 | 2 | 0.23 | Rolls | 1800 |
| EX 75 | 80 Exact0201 | 20 | 500 | 25 | 3 | 0.12 | Tiles | 3200 |
| Ex 76 | 80 Exact0201 | 20 | 350 | 18 | 2 | 0.15 | Rolls | 2000 |

In the examples, the polyolefin blend DF710/EVA(35/65) is composed of 35 parts of Tafmer DF710 from Mitsui and 65% parts of EVA, the EVA comprising 19%wt of vinyl acetate, and having a MFI of around 0,65g/10 min (Escorene™ Ultra 000119 from ExxonMobil). Exact48201 (from Dexplastomer) is a polyolefin obtained by a metallocene-based catalysis with a density of 0.882g/cm³ and an MFI of 1g/10 min. Exact0201(from Dexplastomer) is a polyolefin obtained by a metallocene-based catalysis, having a density of 0.902g/cm³ and an MFI of 1g/10 min. Clearflex^{®} CHDO (from Polimeri Europa) is a VLDPE having a density of 0.9g/cm³ and an MFI of 2g/10 min. LLDPE/VLDPE is a mixture (1/1) of a LLDPE (Flexirene^{®} CL10 from Polimeri Europa) having a density of 0,918 g/cm³ and an MFI of 3 g/10 min and of a VLDPE (Clearflex^{®} CHDO from Polimeri Europa).

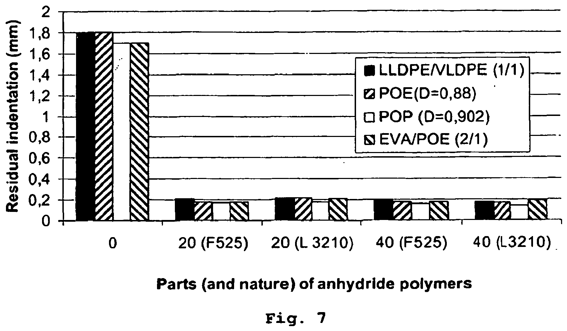

F603 (Fusabond^{®} 603 from DuPont™) is an acid anhydride grafted polymer, having a density of 0.940g/cm³ and a MFI of 25g/10min. Alternatively, the F603 may be replaced by Lotader 3210 from Arkema (figure 7) having a density of 0.940g/cm³ and a MFI of 25g/10min and comprising around 3.1%wt of maleic anhydride in a terpolymer of ethylene-acrylic ester-maleic anhydride. Fusabond^{®} 525 from DuPont™ is an elastomer, obtained by a metallocene-based catalysis, and comprising around 2% of maleic anhydride. F525 has a density of 0.88 g/cm³, a MFI of 3.7 g/10min. F250 (Fusabond^{®} 250 from DuPont™) is an EVA polymer chemically modified with maleic anhydride and comprising around 28% of vinyl acetate. F250 has a density of 0.962 g/cm³ and a MFI of 1.4g/10 min. Alternatively, the polymer grafted with maleic anhydride may be Orevac^{®} from Arkema 18211.

The calcium carbonate, used as filler, is VS 35 from Omya, the mineral oil is Plastol 545 from ExxonMobil, and the stearic acid is Radiacid 445 From Oleon.

From the different examples, it appears that the addition of a polymer comprising acid anhydride groups to various polyolefin resins improves considerably the residual indentation property in comparison with the comparative examples (EX A, EX D and EX G) without any polymer with specific chemical functions such as ionomers or acid terpolymers, and in comparison with a layer comprising a terpolymer comprising acrylic acid monomers not neutralised (Bynel^{®} 2002 from Dupont, in EX M, EX N, and EX O) and in comparison with a layer comprising a terpolymer comprising acid-based monomers partially neutralised to form an ionomer (EX C, EX F, EX I, EX L), while both terpolymers are known to improve the impact resistance and elastic properties of a layer incorporating such compound. Furthermore, this improvement is shown for compositions comprising a single type of polyolefin resin and also for compositions comprising a combination of polyolefin resins (table 4 to 8).

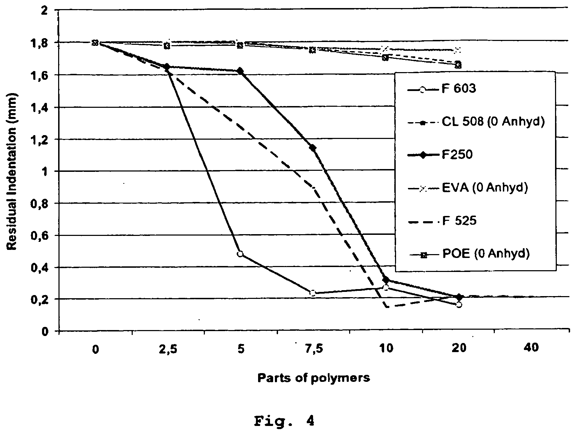

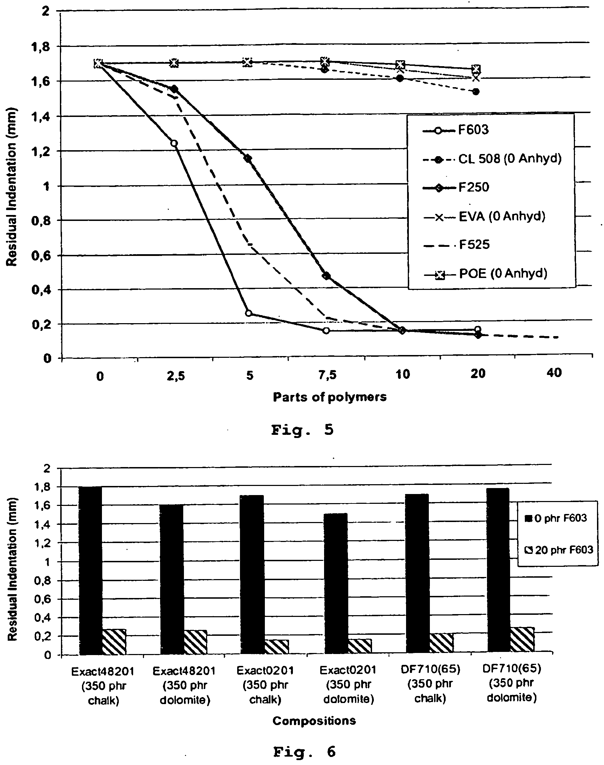

In further experiments, the residual indentation of layers of the examples of tables 4 to 7, having a content of 2.5 to 40 parts of a polymer comprising acid anhydride groups, was assessed and the results are presented in figures 4 and 5.

It appears that a significant improvement of the residual indentation is observed for all type of polymers comprising acid anhydride groups used in combination with all type of polyolefin resin, or combination or resins, tested.

Furthermore, by comparing the residual indentation of a layer comprising a polymer comprising acid anhydride groups, with a layer comprising the same polymer without acid anhydride groups (figures 4 and 5), it appears that the indentation improvement is not dependent of the polymer type used to carry the acid anhydride groups.

In these examples, PE with anhydride groups (Fusabond 603) is replaced by PE (same density but with no acid anhydride groups : Clearflex CL 508 from Polymeri Europa (density 0.935 and MFI equal to 3,5)), EVA with acid anhydride groups (Fusabond 250) is replaced by an EVA with the same level of VA (28%) but with no acid anhydride group (Escorene 328 from ExxonMobil (28% VA and MFI equal to 3)), POE with acid anhydride groups (Fusabond 525) is replaced by a POE from Dexplastomer containing no acid anhydride groups (Exact 48201 that has 0.882 of density and MFI equal to 1).

These experiments definitively prove the positive influence of polymers with acid anhydride groups on the residual indentation performance for floor and wall covering applications based on polyolefin polymers, either if the acid anhydride groups are integrated into the polymer chain or if chemically grafted on the polymer chain (figure 7). Moreover, we have seen in the same comparisons that polymers containing acid groups (see ionomers (Surlyn) and Bynel) have poor contributions to residual indentations performances.

Furthermore, the combination of at least one polyolefin resin and a polymer comprising acid anhydride groups allows to improve, not only the residual indentation properties of a polymeric layer (figures 4 and 5), but also the resistance at break properties of a multiple layer covering comprising such a layer (tables 4 to 8).

Generally, at least one of the layers of a the covering comprises a filler which is used to give weight to the surface covering and to improve its heat resistance. The effect of the quantity of filler (i.e. chalk) was studied (figure 6) on the different support layers comprising the different polyolefin resins and 20 parts of a polymer comprising acid anhydride groups, the quantity of processing additives being adapted in accordance to the quantity of filler to obtain compositions able to be processed according to Table 9.

**Table 9**

| Filler (phr) | Mineral oil (phr) | Stearic acid (phr) | TiO₂ (phr) |
|---|---|---|---|
| 0 | 0 | 0 | 0 |
| 50 | 1 | 0.3 | 0 |
| 100 | 3 | 0.6 | 1.5 |
| 200 | 6 | 0.8 | 3 |
| 350 | 18 | 2 | 8 |
| 500 | 25 | 3 | 15 |

As expected the addition of chalk to a composition without a polymer comprising acid anhydride groups has a negative influence on the indentation property as it increases the residual indentation. The addition of a polymer comprising acid anhydride to a composition without filler has a positive influence as it improves the residual indentation. Moreover, this positive influence is even more important for compositions comprising fillers.

In addition, from figure 6, it appears that the use of dolomite as filler gives similar results to those obtained when chalk was used.

Taking into account that generally, a PVC layer in a multiple layer surface covering presents a residual indentation of between 0.15 to 0.25 mm and a hardness of between 1000 and 2000, it appears that a layer made with the thermoplastic composition according to the invention has identical or similar properties than a PVC layer.

The at least one layer of the floor or wall covering according to the present invention may be produced by any suitable process, for example by calendering, extrusion or melt extrusion.

The at least one layer is preferably a support layer of a multiple layer floor covering. Preferably, the multiple layer floor covering further comprises a wear layer, and more preferably a polyurethane coating on the wear layer.

## Claims

1. PVC-free floor or wall covering
comprising at least one layer of a thermoplastic composition, said composition comprising:
- a polymer matrix comprising at least one polymer selected from the group consisting of EVA, EMA, EBA, EEA, EPM, EPDM, VLDPE, LLDPE, POE, and POP, or mixtures thereof and having a MFI of between 0.6 and 3g/10 min (at 190°C under 2.16 kg weight), and at least one polymer having 0.5 to 3.1% wt of acid anhydride groups and representing 10 to 40 parts wt of said matrix,
EVA representing 20 to 40 parts of said matrix,
VLDPE having a density between 0.895 and 0.905 g/cm³ representing 20 to 40 parts of said matrix,
POE or POP having a density between 0.870 and 0.902 g/cm³ representing 20 to 40 parts of said matrix,
the total amount of the polymers being combined to 100 parts, and
- 100 to 500 parts of at least one filler per 100 parts of polymer or polymers.

2. PVC-free floor or wall covering
comprising at least one layer of a thermoplastic composition, said composition comprising:
- a polymer matrix comprising at least one polymer selected from the group consisting of EVA, EMA, EBA, EEA, EPM, EPDM, VLDPE, LLDPE, POE, and POP, or mixtures thereof and having a MFI of between 0.6 and 3g/10 min (at 190°C under 2.16 kg weight), and at least one polymer having 0.5 to 3.1% wt of acid anhydride groups and representing 10 to 40 parts wt of said matrix,
LLDPE having a density between 0.915 and 0.925 g/cm³ representing 30 to 45 parts of said matrix,
VLDPE having a density between 0.895 and 0.905 g/cm³ representing 30 to 45 parts of said matrix,
the total amount of the polymers being combined to 100 parts, and
- 100 to 500 parts of at least one filler per 100 parts of polymer or polymers.

3. PVC-free floor or wall covering according to claim 1 or 2, wherein the acid anhydride groups of the at least one polymer with acid anhydride groups are grafted on an olefin polymer.

4. PVC-free floor or wall covering according to claim 1 or 2 or 3, wherein the at least one polymer with acid anhydride groups is an ethylene-acrylic ester-acid anhydride terpolymer.

5. PVC-free floor or wall covering according to any of the preceding claims, wherein the at least one filler is present in an amount between 200 and 350 parts per 100 parts of polymer.

6. PVC-free floor or wall covering according to any of the preceding claims, wherein the acid anhydride is maleic anhydride.

7. PVC-free floor or wall covering according to any of the preceding claims, wherein the at least one polymer with acid anhydride groups represents between 10 and 30 parts per 100 parts of the total amount of polymer or polymers of the thermoplastic composition.

8. PVC-free floor or wall covering according to any of the preceding claims, wherein the at least one filler is calcium carbonate and/or calcium magnesium carbonate.

9. PVC-free floor or wall covering according to any of the preceding claims, wherein the thermoplastic composition further comprises 0.5 to 4 parts of stearic acid and/or 2 to 25 parts of a mineral oil per 100 parts of polymer.

10. PVC-free floor or wall covering according to any of the preceding claims, wherein the at least one layer is a support layer of a multiple layer floor or wall covering in the form of rolls or tiles.

## Patentansprüche

1. PVC-freier Boden- oder Wandbelag, umfassend mindestens eine Schicht aus einer thermoplastischen Zusammensetzung, wobei die Zusammensetzung Folgendes umfasst:
- eine Polymermatrix, umfassend mindestens ein Polymer aus der Gruppe bestehend aus EVA, EMA, EBA, EEA, EPM, EPDM, VLDPE, LLDE, POE und POP oder Mischungen davon mit einem MFI zwischen 0,6 und 3 g/10 min (bei 190°C und einem Gewicht von 2,16 kg) und mindestens ein Polymer mit 0,5 bis 3,1 Gew.-% Säureanhydridgruppen, das 10 bis 40 Gewichtsteile der Matrix ausmacht,
wobei EVA 20 bis 40 Teile der Matrix ausmacht,
wobei VLDPE mit einer Dichte zwischen 0,895 und 0,905 g/cm³ 20 bis 40 Teile der Matrix ausmacht,
wobei POE oder POP mit einer Dichte zwischen 0,870 und 0,902 g/cm³ 20 bis 40 Teile der Matrix ausmacht,
wobei sich die Gesamtmenge der Polymere auf 100 Teile beläuft, und
- 100 bis 500 Teile mindestens eines Füllstoffs pro 100 Teile Polymer bzw. Polymere.

2. PVC-freier Boden- oder Wandbelag, umfassend mindestens eine Schicht aus einer thermoplastischen Zusammensetzung, wobei die Zusammensetzung Folgendes umfasst:
- eine Polymermatrix, umfassend mindestens ein Polymer aus der Gruppe bestehend aus EVA, EMA, EBA, EEA, EPM, EPDM, VLDPE, LLDE, POE und POP oder Mischungen davon mit einem MFI zwischen 0,6 und 3 g/10 min (bei 190°C und einem Gewicht von 2,16 kg) und mindestens ein Polymer mit 0,5 bis 3,1 Gew.-% Säureanhydridgruppen, das 10 bis 40 Gewichtsteile der Matrix ausmacht,
wobei LDPE mit einer Dichte zwischen 0,915 und 0,925 g/cm³ 30 bis 45 Teile der Matrix ausmacht,
wobei VLDPE mit einer Dichte zwischen 0,895 und 0,905 g/cm³ 30 bis 45 Teile der Matrix ausmacht,
wobei sich die Gesamtmenge der Polymere auf 100 Teile beläuft, und
100 bis 500 Teile mindestens eines Füllstoffs pro 100 Teile Polymer bzw. Polymere.

3. PVC-freier Boden- oder Wandbelag nach Anspruch 1 oder 2, wobei die Säureanhydridgruppen des mindestens einen Polymers mit Säureanhydridgruppen auf ein Olefinpolymer aufgepfropft sind.

4. PVC-freier Boden- oder Wandbelag nach Anspruch 1 oder 2 oder 3, wobei es sich bei dem mindestens einen Polymer mit Säureanhydridgruppen um ein Ethylen-Acrylsäureester-Säureanhydrid-Terpolymer handelt.

5. PVC-freier Boden- oder Wandbelag nach einem der vorhergehenden Ansprüche, wobei der mindestens eine Füllstoff in einer Menge zwischen 200 und 350 Teilen pro 100 Teile Polymer vorliegt.

6. PVC-freier Boden- oder Wandbelag nach einem der vorhergehenden Ansprüche, wobei es sich bei dem Säureanhydrid um Maleinsäureanhydrid handelt.

7. PVC-freier Boden- oder Wandbelag nach einem der vorhergehenden Ansprüche, wobei das mindestens eine Polymer mit Säureanhydridgruppen zwischen 10 und 30 Teile pro 100 Teile der Gesamtmenge von Polymer bzw. Polymeren der thermoplastischen Zusammensetzung ausmacht.

8. PVC-freier Boden- oder Wandbelag nach einem der vorhergehenden Ansprüche, wobei es sich bei dem mindestens einen Füllstoff um Calciumcarbonat und/oder Calciummagnesiumcarbonat handelt.

9. PVC-freier Boden- oder Wandbelag nach einem der vorhergehenden Ansprüche, wobei die thermoplastische Zusammensetzung ferner 0,5 bis 4 Teile Stearinsäure und/oder 2 bis 25 Teile eines Mineralöls pro 100 Teile Polymer umfasst.

10. PVC-freier Boden- oder Wandbelag nach einem der vorhergehenden Ansprüche, wobei es sich bei der mindestens einen Schicht um eine Trägerschicht eines mehrschichtigen Boden- oder Wandbelags in Form von Rollen oder Platten handelt.

## Revendications

1. Revêtement de sol ou de mur sans PVC comprenant au moins une couche d'une composition thermoplastique, ladite composition comprenant :
- une matrice polymère comprenant au moins un polymère choisi dans le groupe constitué par l'EVA, l'EMA, l'EBA, l'EEA, l'EPM, l'EPDM, le VLDPE, le LLDE, le POE et le POP, ou un mélange de ceux-ci, et ayant un indice de fluidité (IF) compris entre 0,6 et 3 g/10 min (à 190 °C sous un poids de 2,16 kg), et au moins un polymère comportant 0,5 à 3,1 % en poids de groupes anhydride d'acide et représentant 10 à 40 parties en poids de ladite matrice,
l'EVA représentant 20 à 40 parties de ladite matrice ;
le VLDPE ayant une densité comprise entre 0,895 et 0,905 g/cm³ représentant 20 à 40 parties de ladite matrice ;
le POE ou POP ayant une densité comprise entre 0,870 et 0,902 g/cm³ représentant 20 à 40 parties de ladite matrice ;
la quantité totale des polymères étant combinée à 100 parties, et
- 100 à 500 parties d'au moins une charge pour 100 parties de polymère ou polymères.

2. Revêtement de sol ou de mur sans PVC comprenant au moins une couche d'une composition thermoplastique, ladite composition comprenant :
- une matrice polymère comprenant au moins un polymère choisi dans le groupe constitué par l'EVA, l'EMA, l'EBA, l'EEA, l'EPM, l'EPDM, le VLDPE, le LLDE, le POE et le POP, ou un mélange de ceux-ci, et ayant un indice de fluidité (IF) compris entre 0,6 et 3 g/10 min (à 190 °C sous un poids de 2,16 kg), et au moins un polymère comportant 0,5 à 3,1 % en poids de groupes anhydride d'acide et représentant 10 à 40 parties en poids de ladite matrice,
le LLDPE ayant une densité comprise entre 0,915 et 0,925 g/cm³ représentant 30 à 45 parties de ladite matrice ;
le VLDPE ayant une densité comprise entre 0,895 et 0,905 g/cm³ représentant 30 à 45 parties de ladite matrice ;
la quantité totale des polymères étant combinée à 100 parties, et
- 100 à 500 parties d'au moins une charge pour 100 parties de polymère ou polymères.

3. Revêtement de sol ou de mur sans PVC selon la revendication 1 ou 2, dans lequel les groupes anhydride d'acide de l'au moins un polymère avec des groupes anhydride d'acide sont greffés sur un polymère oléfinique.

4. Revêtement de sol ou de mur sans PVC selon la revendication 1 ou 2 ou 3, dans lequel l'au moins un polymère avec des groupes anhydride d'acide est un terpolymère éthylène-ester acrylique-anhydride d'acide.

5. Revêtement de sol ou de mur sans PVC selon l'une quelconque des revendications précédentes, dans lequel l'au moins une charge est présente dans une quantité comprise entre 200 et 350 parties pour 100 parties de polymère.

6. Revêtement de sol ou de mur sans PVC selon l'une quelconque des revendications précédentes, dans lequel l'anhydride d'acide est l'anhydride maléique.

7. Revêtement de sol ou de mur sans PVC selon l'une quelconque des revendications précédentes, dans lequel l'au moins un polymère avec des groupes anhydride d'acide représente entre 10 et 30 parties pour 100 parties de la quantité totale de polymère ou polymères de la composition thermoplastique.

8. Revêtement de sol ou de mur sans PVC selon l'une quelconque des revendications précédentes, dans lequel l'au moins une charge est le carbonate de calcium et/ou le carbonate de calcium et de magnésium.

9. Revêtement de sol ou de mur sans PVC selon l'une quelconque des revendications précédentes, dans lequel la composition thermoplastique comprend en outre 0,5 à 4 parties d'acide stéarique et/ou 2 à 25 parties d'une huile minérale pour 100 parties de polymère.

10. Revêtement de sol ou de mur sans PVC selon l'une quelconque des revendications précédentes, dans lequel l'au moins une couche est une couche de support d'un revêtement de sol ou de mur multicouche sous la forme de rouleaux ou de dalles.
